Europäisches Patentamt

European Patent Office

Office européen des brevets

(19)

(11) Numéro de publication: **0 270 515 B1**

(12)

# FASCICULE DE BREVET EUROPEEN

(45) Date de publication de fascicule du brevet: **14.04.93**

(51) Int. Cl.5: **C08F 297/04**, C08L 53/02, C08L 57/00

(21) Numéro de dépôt: **87870163.0**

(22) Date de dépôt: **30.11.87**

(54) **Procédé pour fabriquer des copolymères blocs transparents.**

(30) Priorité: **04.12.86 LU 86698**

(43) Date de publication de la demande:
**08.06.88 Bulletin 88/23**

(45) Mention de la délivrance du brevet:
**14.04.93 Bulletin 93/15**

(84) Etats contractants désignés:
**AT BE CH DE ES FR GB IT LI NL SE**

(56) Documents cités:
**EP-A- 0 242 614**
**US-A- 4 089 913**
**US-A- 4 122 134**
**US-A- 4 495 323**

(73) Titulaire: **FINA RESEARCH S.A.**
**Zone Industrielle C**
**B-7181 Feluy(BE)**

(72) Inventeur: **Lanza, Emmanuel**
**avenue du Champ de Mai, 12 Bte 47**
**B-1410 Waterloo(BE)**
Inventeur: **Naveau, Jean M.M.G.**
**rue du Paradis, 89**
**B-1400 Nivelles(BE)**
Inventeur: **Daumerie, Michel**
**rue de Bousies, 2**
**B-7410 Ghlin(BE)**

(74) Mandataire: **Leyder, Francis et al**
**c/o Fina Research S.A. Zone Industrielle C**
**B-6520 Feluy (Feluy) (BE)**

## Description

La présente invention se rapporte à un procédé pour produire de nouveaux copolymères blocs transparents à partir de monomères vinylaromatiques et de diène conjugué ayant d'excellentes propriétés mécaniques notamment lorsqu'on les mélange avec des polymères thermoplastiques comme le polystyrène.

En particulier, la présente invention se rapporte à un procédé de préparation de ces copolymères blocs transparents linéaires ne comportant pas d'agents de couplage.

On connaît déjà divers copolymères blocs transparents préparés à partir de monomères vinylaromatiques et de diène conjugué, mais qui, lorsqu'ils sont mélangés à des polymères thermoplastiques, ne permettent pas d'obtenir un bon équilibre de propriétés mécaniques. Les défaillances de certaines propriétés mécaniques sont probablement dues à la structure des copolymères blocs eux-mêmes.

Ainsi, on décrit dans le brevet US 3 639 517 des copolymères blocs branchés, à au moins 3 branches, et présentant une structure plurimodale. Ces copolymères présentent notamment une résistance au choc ainsi qu'un pourcentage d'élongation relativement faibles, qu'ils soient ou non mélangés avec du polystyrène. De plus, les propriétés optiques ainsi que les propriétés de flexibilité de ces copolymères ne sont pas exceptionnelles.

On a d'ailleurs déjà proposé dans le brevet US 4 091 053 d'améliorer les propriétés de flexibilité en réglant de manière précise les différentes additions de styrène lors de la préparation des copolymères blocs branchés transparents, mais les autres défauts n'ont pas encore été réduits.

Dans le brevet américain 4 086 298, on décrit également des copolymères blocs branchés, dont au moins deux branches ont des blocs élastomériques terminaux, du type $A_1$-B->$A_2$(x)$A_2$<-B la transition dans le bloc élastomérique se faisant graduellement.

De manière à ne pas être limité à un bloc élastomérique terminal, on décrit dans le brevet US 4 167 545 un copolymère bloc branché à au moins trois branches du type $(A_1$-$A_2$-B->$A_3$)(x)$(A_3$<-B-$A_2$) la transition dans le bloc élastomérique se faisant graduellement. Cependant, ni l'un ni l'autre de ces copolymères blocs ne donnent de propriétés mécaniques suffisantes.

On décrit dans le brevet US 4 221 884 des copolymères blocs branchés transparents et de structure bimodale dont au moins deux branches ont des groupes élastomériques terminaux, dans lesquels on voit apparaître des copolymères statistiques de butadiène et de styrène. Cependant ce type de copolymère bloc n'apporte pas non plus des propriétés mécaniques valables.

On décrit également dans le brevet US 4 089 913, un copolymère bloc linéaire dans lequel le bloc élastomérique est nécessairement constitué par un copolymère statistique de butadiène et de styrène; cependant il ne donne pas non plus de bons résultats lorsqu'on le mélange avec du polystyrène.

Il apparaît donc qu'il existe un besoin pour des copolymères blocs transparents préparés à partir de monomères vinylaromatiques et de diène conjugué ayant de bonnes propriétés mécaniques notamment de résistance au choc, d'élongation, de flexibilité, qu'ils soient utilisés purs ou surtout lorsqu'il sont utilisés en mélange avec un polymère thermoplastique comme le polystyrène.

La présente invention a pour objet un procédé pour produire un nouveau copolymère bloc, formé sans agent de couplage, à partir de monomères vinylaromatiques et de diène conjugué ayant à la fois d'excellentes propriétés mécaniques et d'excellentes propriétés de transparence.

En particulier, la présente invention a pour objet un procédé pour produire de tels copolymères blocs essentiellement linéaires et ayant des bonnes propriétés mécaniques et optiques.

La présente invention a également pour objet un procédé pour produire de tels copolymères blocs linéaires, transparents et possédant de bonnes propriétés mécaniques, et qui se dispersent facilement dans les polymères thermoplastiques comme le polystyrène.

Le présente invention a également pour objet un procédé pour produire des copolymères blocs linéaires, transparents, qui, lorsqu'ils sont utilisés purs ou en mélange avec d'autres polymères thermoplastiques, ont d'excellentes propriétés de résistance au choc, de flexibilité et d'élongation.

Le procédé de la présente invention pour la production de copolymères blocs linéaires transparents contenant de 60 à 95% de monomère vinylaromatique et de 5 à 40% d'un monomère de diène conjugué, est caractérisé en ce qu'il consiste à former par polymérisation anionique séquencée, dans un milieu solvant,

(1) un homopolymère vinylaromatique d'un poids moléculaire compris entre 5.000 et 50.000, désigné par $S_1$, en présence d'une quantité suffisante, liée au poids moléculaire souhaité pour $S_1$, d'un catalyseur organolithium pour amorcer la polymérisation du monomère vinylaromatique,

(2) un homopolymère de diène conjugué de poids moléculaire compris entre 3.000 et 30.000, lié au segment $S_1$ et désigné par $B_1$,

(3) à introduire dans le milieu réactionnel un monomère vinylaromatique et un monomère de diène conjugué, en quantité suffisante pour former un copolymère statistique de poids moléculaire compris entre 10.000 et 100.000 lié au segment $B_1$ et désigné par B/S,

(4) à introduire le monomère vinylaromatique pour former un homopolymère désigné par $S_2$ d'un poids moléculaire compris entre 10.000 et 150.000, et de toute manière d'un poids moléculaire correspondant à au moins le double de celui du segment $S_1$, ce segment $S_2$ étant lié au segment B/S

(5) à récupérer le copolymère bloc $S_1$-$B_1$-B/S-$S_2$ ainsi formé.

La Demanderesse a trouvé d'une manière inattendue que la réalisation d'une résine transparente ayant d'excellentes propriétés mécaniques dépendait de la structure et de l'ordre d'enchaînement des blocs de monomère vinylaromatique et de diène conjugué utilisés.

Alors que certains préconisent d'utiliser un bloc caoutchouteux constitué uniquement soit d'un homopolymère de butadiène, soit d'un copolymère statistique de butadiène et de styrène, la Demanderesse a trouvé que non seulement le bloc caoutchouteux devait être constitué de ces deux composants, mais encore que les chaînons d'homopolymère vinylaromatique reliés à ce bloc caoutchouteux doivent avoir des poids moléculaires bien définis, et doivent occuper des positions bien définies. Ainsi, selon le procédé de l'invention, la Demanderesse a trouvé que les copolymères blocs les plus appropriés avaient la structure générale suivante :

$$S_1 - B_1 - B/S - S_2$$

dans laquelle $S_1$ et $S_2$ représentent des chaînons d'homopolymère de monomère vinylaromatique, $B_1$ représente un homopolymère de diène conjugué et B/S un copolymère statistique de diène conjugué et de vinylaromatique. De plus, le poids moléculaire de $S_2$ doit être nettement supérieur à celui de $S_1$ et généralement au moins le double du poids moléculaire de $S_1$, et de préférence le triple.

Les copolymères blocs de la présente invention sont caractérisés par d'excellentes propriétés optiques et par d'excellentes propriétés mécaniques, particulièrement lorsque l'on mélange ces copolymères blocs avec un polymère thermoplastique comme le polystyrène.

Les composés vinylaromatiques qui peuvent être utilisés dans les copolymères blocs de la présente invention sont le styrène, l'alpha-méthylstyrène, le vinyltoluène, le vinylnaphtalène et d'autres styrènes substitués sur le noyau. Les diènes conjugués qui peuvent être utilisés dans la présente invention sont le 1,3-butadiène, l'isoprène, le piperylène, le 2,3 diméthyl-1,3-butadiène et les mélanges de ceux-ci. On préfère naturellement utiliser le styrène et le 1,3-butadiène pour des facilités de disponibilité.

Le rapport pondéral total entre monomères vinylaromatiques et de diène conjugué présents dans le copolymère bloc de l'invention est compris entre 95/5 et 60/40 de préférence entre 85:15 et 65:35. Lorsque l'on utilise plus de 95 parties de monomère vinylaromatique, on observe une réduction de la résistance au choc et de l'élongation, tandis que si l'on met moins de 60 parties de monomère vinylaromatique, le copolymère a une texture élastomérique, et on observe une réduction des propriétés optiques.

Les copolymères blocs de l'invention sont généralement préparés par polymérisation anionique en présence d'un solvant qui peut être un hydrocarbure aliphatique, cycloaliphatique ou aromatique, et d'un composé organolitique à titre de catalyseur.

A titre de solvants appropriés, on peut citer les hydrocarbures aromatiques comme le benzène, le toluène, le xylène et l'éthylbenzène, le naphtalène, les hydrocarbures aliphatiques et cycloaliphatiques comme l'isobutane, le n-pentane, le cyclopentane, l'hexane, le cyclohexane, le méthylcyclohexane et leurs mélanges. On utilise de préférence le cyclohexane pour des raisons de disponibilité et de solubilité des systèmes polymériques riches en styrène, et plus particulièrement un mélange de cyclohexane et d'hexane.

Des exemples de composés organolitiques appropriés comprennent l'éthyllithium, le propyllithium, le butyllithium, l'amyllithium, l'hexyllithium, le cyclohexyllithium, le phényllithium, le tolyllithium, le naphthyllithium et leurs isomères en particulier le sec-butyllithium et le tert-butyllithium.

Selon le procédé de l'invention, la première étape consiste à polymériser par amorçage anionique un monomère vinylaromatique, de préférence le styrène, en présence d'un solvant et d'un initiateur organolitique.

La proportion de solvant dans le milieu sera fonction de la viscosité et du transfert thermique possible dans le réacteur, mais généralement elle est comprise entre deux fois et dix fois le poids des monomères présents.

La quantité d'initiateur organolitique, dont les exemples appropriés ont été mentionnés ci-dessus, dépendra du poids moléculaire désiré pour le premier segment, $S_1$.

On polymérise ainsi le monomère vinylaromatique de manière à obtenir un homopolymère ayant un poids moléculaire compris entre 5.000 et 50.000 et de préférence entre 10.000 et 25.000. Ce bloc est

désigné par $S_1$.

La poursuite de la polymérisation anionique séquencée peut s'effectuer de différentes manières.

Selon un mode d'exécution de l'invention, on introduit d'abord un monomère de diène conjugué, de préférence du 1,3-butadiène dans le mélange réactionnel, de manière à former un bloc ayant un poids moléculaire compris entre 3.000 et 30.000; ce segment est désigné par $B_1$ et est lié au segment $S_1$. On ajoute ensuite un mélange de monomère vinylaromatique et de diène conjugué de préférence du styrène et du 1,3-butadiène pour former un copolymère statistique ayant un poids moléculaire compris entre 10.000 et 100.000; ce segment est appelé B/S et est lié au segment $B_1$.

La distribution statistique des monomères est assurée par l'introduction dans le solvant présent dans le milieu réactionnel, d'un agent choisi parmi les bases de Lewis, comme les éthers et les amines tertiaires.

A titre d'exemples de tels agents on peut citer les éthers cycliques, les monoéthers aliphatiques et les polyéthers aliphatiques.

A titre d'exemples appropriés on peut mentionner le tétrahydrofurane, les dialkyls éthers en $C_2$ et $C_3$, le diéthylèneglycol diméthyléther, le diéthylèneglycol diéthyléther et le tétrahydropyrane.

A titre d'amines tertiaires appropriées on peut citer la triéthylamine, la tripropylamine, la tributylamine, la N,N-diméthylaniline, la pyridine, la quinoline et la tétraméthyle éthylène diamine. On utilise ces agents généralement en une quantité comprise entre 0,01 et 5 phr par rapport au total des monomères.

On terminera ensuite la polymérisation en ajoutant du monomère vinylaromatique, de préférence le styrène au milieu réactionnel de manière à former un bloc homopolymère d'un poids moléculaire compris entre 10.000 et 150.000, et de toute manière d'un poids moléculaire d'au moins le double et de préférence le triple de celui du segment $S_1$. Ce dernier segment est appelé $S_2$ et il est lié au segment B/S.

Selon un autre mode d'exécution du procédé de l'invention, après avoir réalisé le segment $S_1$, on introduit simultanément les monomères de diène conjugué et de vinylaromatique. Ensuite, en l'absence ou en présence d'une faible quantité ne dépassant pas 0,2 phr (partie pour 100 parties de résine) d'un agent du type base de Lewis tel que décrit ci-dessus, le monomère de diène conjugué polymérise plus rapidement que l'autre monomère, et on forme ainsi d'abord essentiellement un homopolymère bloc de diène conjugué ayant un poids moléculaire compris entre 3.000 et 30.000, désigné par $B_1$ et lié au segment $S_1$, et enfin un segment statistique diène conjugué-vinylaromatique, désigné par B/S et lié à $B_1$, dont la longueur dépend de la quantité de base de Lewis introduite, et finalement, après consommation de tout le diène conjugué, on forme un bloc d'homopolymère vinylaromatique dont le poids moléculaire est compris entre 10.000 et 150.000, et généralement ce poids est au moins le double et de préférence le triple de celui du segment $S_1$. Ce dernier segment est désigné par $S_2$ et lié au segment B/S.

Selon le procédé de l'invention, le copolymère bloc obtenu a un poids moléculaire qui peut varier entre 50.000 et 250.000, ainsi qu'une viscosité dans le toluène comprise entre 3,5 et 7,5 cst (déterminée à 25°C au départ d'une solution de polymère à 5,23% dans le toluène).

Des poids moléculaires plus élevés peuvent être obtenus mais généralement au détriment des propriétés d'indice d'écoulement en copolymère aux températures de transformation.

La Demanderesse a également trouvé que l'on pouvait améliorer les propriétés optiques des résines en réglant la proportion de monomère de diène conjugué entre la partie pure $B_1$ et la partie statistique B/S en fonction de la quantité totale de monomère de diène conjugué présent dans le copolymère bloc pris dans sa totalité. Pour que la résine ait de bonnes propriétés optiques, il est préférable que le rapport des monomères de diène conjugué dans le segment $B_1$ sur les monomères de diène conjugué dans le segment B/S soit de 0,1 à 0,4, de préférence entre 0,15 et 0,3.

La polymérisation selon la présente invention s'effectue à une température comprise entre -20 et 150°C, et à une pression suffisante pour maintenir les monomères et le solvant en phase liquide.

Lorsque la polymérisation est complète, on ajoute au milieu réactionnel une quantité suffisante d'eau, de méthanol ou d'isopropanol pour désactiver les chaînes vivantes, et si nécessaire, on ajoute également un anti-oxydant.

Les copolymères blocs obtenus selon le procédé de l'invention sont parfaitement transparents et peuvent être mélangés à des résines comme le polystyrène crystal, les polyoléfines, telles que le polyéthylène ou le polypropylène, les copolymères styréniques tels que styrène-méthacrylate (SMMA), styrène-anhydride maléique (SMA), styrène-acrylonitrile (SAN), pour être utilisés par exemple dans la fabrication d'objets thermoformés au départ de feuilles extrudées.

On a d'ailleurs constaté que les copolymères blocs de l'invention permettent d'obtenir des compositions ayant de très bonnes propriétés mécaniques lorsqu'il sont mélangés avec du polystyrène à raison de 10 à 90%, et de préférence de 30 à 70% en poids.

On a ainsi constaté que les résistances au choc et à la flexion sont nettement améliorées.

Les exemples suivants sont donnés afin de mieux illustrer la présente invention, mais sans pour autant en limiter la portée.

Toutes les parties et pourcentages sont donnés en poids, sauf mention contraire.

Exemple 1

On introduit dans un réacteur pressurisé les quantités suivantes calculées pour 100 parties en poids de monomères de styrène et de 1,3-butadiène.

On a ainsi introduit d'abord 471 parts d'un mélange solvant constitué de 85% de cyclohexane et de 15% de n-hexane.

On a introduit ensuite du THF à raison de 0,07 phr et le styrène monomère à raison de 16,7 parts.

A ce moment la température du milieu réactionnel est portée à 65°C et on injecte du n-butyllithium sous forme d'une solution à 20% dans le cyclohexane de manière à disposer de 0,083 phr dans le milieu.

Le bloc $S_1$ ainsi polymérisé avait un poids moléculaire de 14.000.

On a ensuite poursuivi la polymérisation séquencée en injectant simultanément 25 parts de 1,3 butadiène et 58,3 parts de styrène, de manière à former un bloc de polybutadiène pur de 6.800 de poids moléculaire et un bloc statistique de poids moléculaire 53.200.

Le styrène monomère restant polymérise et forme un homopolymère bloc terminal de poids moléculaire 40.000.

Le polymère vivant ainsi formé est désactivé par addition de 0,3 phr de BHT.

Le poids moléculaire du polymère final était de 114.000.

Le polymère est récupéré par élimination du solvant.

Les propriétés obtenues avec ce copolymère pris seul ou en mélange avec du polystyrène cristal sont indiquées au tableau 1.

A titre de comparaison, on introduit dans un réacteur pressurisé les quantités suivantes calculées pour 100 parties en poids de monomères de styrène et de 1,3-butadiène.

On a ainsi introduit d'abord 672 parts d'un mélange solvant constitué de 85% de cyclohexane et de 15% de n-hexane.

On a introduit ensuite du THF à raison de 0,07 phr et le styrène monomère à raison de 56,25 parts.

A ce moment la température du milieu réactionnel est portée à 65°C et on injecte le n-butyllithium sous forme d'une solution à 20% dans le cyclohexane de manière à disposer de 0,07 phr dans le milieu.

Le bloc $S_1$ ainsi polymérisé avait un poids moléculaire de 56.000.

On a ensuite poursuivi la polymérisation séquencée en injectant simultanément 25 parts de 1,3-butadiène et 18,75 parts de styrène, de manière à former un bloc de polybutadiène pur de 5.500 de poids moléculaire et un bloc statistique de poids moléculaire 39.000.

Le styrène monomère restant polymérise et forme un homopolymère bloc terminal de poids moléculaire 15.000.

Le polymère vivant ainsi formé est désactivé par addition de 0,3 phr de BHT (di-tert-butylhydroxytoluène).

Le poids moléculaire du polymère final était de 115.500.

Le polymère est récupéré par élimination du solvant.

Les propriétés obtenues avec ce copolymère pris seul ou en mélange avec du polystyrène cristal sont indiquées au tableau 1.

Exemple 2

On introduit dans un réacteur pressurisé les quantités suivantes calculées pour 100 parties en poids de monomères de styrène et de 1,3-butadiène.

On a ainsi introduit d'abord 471 parts d'un mélange solvant constitué de 85% de cyclohexane et de 15% de n-hexane.

On a introduit le styrène monomère à raison de 16,7 parts dans le milieu.

A ce moment la température du milieu réactionnel est portée à 65°C et on injecte le n-butyllithium sous forme d'une solution à 20% dans le cyclohexane de manière à disposer de 0,087 phr dans le milieu.

Le bloc $S_1$ ainsi polymérisé avait un poids moléculaire de 16.000.

On introduit ensuite dans le milieu réactionnel, 5 parts de 1,3 butadiène et on laisse réagir pendant un temps suffisant. On a ainsi formé un fragment de PB pur ayant un poids moléculaire de 5.500. On introduit simultanément les monomères de styrène et de 1,3 butadiène à raison de 58,3 et 20 parts respectivement.

On a également introduit du THF à raison de 0,07 phr comme agent favorisant la polymérisation statistique.

On a ainsi formé un copolymère statistique de 1,3 butadiène et de styrène ayant un poids moléculaire de 42.000.

Après épuisement du 1,3-butadiène introduit en mélange au styrène, les monomères de styrène restant forment un homopolymère de styrène ayant un poids moléculaire de 43.000.

Le poids moléculaire du polymère final était de 135.500.

Le polymère vivant ainsi formé est désactivé par addition de 0,3 phr de BHT.

Le polymère est récupéré par élimination du solvant.

Les propriétés obtenues avec ce copolymère pris seul ou en mélange avec du polystyrène cristal sont indiquées au tableau 1.

Exemple 3

On introduit dans un réacteur pressurisé les quantités suivantes calculées pour 100 parties en poids de monomères de styrène et de 1,3-butadiène.

On a ainsi introduit d'abord 367 parts d'un mélange solvant constitué de 85% de cyclohexane et de 15% de n-hexane.

On a introduit ensuite du THF à raison de 0,035 phr et le styrène monomère à raison de 12,5 parts.

A ce moment la température du milieu réactionnel est portée à 65°C et on injecte le n-butyllithium sous forme d'une solution à 20% dans le cyclohexane de manière à disposer de 0,077 phr dans le milieu.

Le bloc $S_1$ ainsi polymérisé avait un poids moléculaire de 12.600.

On a ensuite poursuivi la polymérisation séquencée en injectant simultanément 30 parts de 1,3-butadiène et 57,5 parts de styrène, de manière à former un bloc de polybutadiène pur de 6.000 de poids moléculaire et un bloc statistique de poids moléculaire 66.900.

Le styrène monomère restant polymérise et forme un homopolymère bloc terminal de poids moléculaire 50.000. Le poids moléculaire du polymère final est de 130.000.

Le polymère vivant ainsi formé est désactivé par addition de 0,3 phr de BHT.

Le polymère est récupéré par élimination du solvant.

Les propriétés obtenues avec ce copolymère pris seul ou en mélange avec du polystyrène cristal sont indiquées au tableau 1.

Exemple 4

On introduit dans un réacteur pressurisé les quantités suivantes calculées pour 100 parties en poids de monomères de styrène et de 1,3-butadiène.

On a ainsi introduit d'abord 471 parts d'un mélange solvant constitué de 85% de cyclohexane et de 15% de n-hexane.

On a introduit ensuite du THF à raison de 0,07 phr et le styrène monomère à raison de 16,7 parts.

A ce moment la température du milieu réactionnel est portée à 65°C et on injecte le n-butyllithium sous forme d'une solution à 20% dans le cyclohexane de manière à disposer de 0,032 phr dans le milieu.

Le bloc $S_1$ ainsi polymérisé avait un poids moléculaire de 35.600.

On a ensuite poursuivi la polymérisation séquencée en injectant simultanément 25 parts de 1,3 butadiène et 58,3 parts de styrène, de manière à former un bloc de polybutadiène pur de 11.500 de poids moléculaire et un bloc statistique de poids moléculaire 76.900.

Le styrène monomère restant polymérise et forme un homopolymère bloc terminal de poids moléculaire 89.000. Le poids moléculaire du polymère final est de 213.000.

Le polymère vivant ainsi formé est désactivé par addition de 0,3 phr de BHT.

Le polymère est récupéré par élimination du solvant.

Les propriétés obtenues avec ce copolymère pris seul ou en mélange avec du polystyrène cristal sont indiquées au tableau 1.

Exemple 5

On introduit dans un réacteur pressurisé les quantités suivantes calculées pour 100 parties en poids de monomères de styrène et de 1,3-butadiène.

On a ainsi introduit d'abord 270 parts d'un mélange solvant constitué de 85% de cyclohexane et de 15% de n-hexane.

On a introduit ensuite du THF à raison de 0,07 phr et le styrène monomère à raison de 13,5 parts.

A ce moment la température du milieu réactionnel est portée à 65°C et on injecte le n-butyllithium sous forme d'une solution à 20% dans le cyclohexane de manière à disposer de 0,066 phr dans le milieu.

Le bloc $S_1$ ainsi polymérisé avait un poids moléculaire de 17.900.

On a ensuite poursuivi la polymérisation séquencée en introduisant dans le milieu réactionnel 5,25 parts de 1,3 butadiène et on a laissé réagir ce monomère un temps suffisant. On a ainsi formé un fragment de polybutadiène pur ayant un poids moléculaire de 7.400.

On introduit simultanément les monomères de styrène et de 1,3 butadiène à raison de 15.75 et 19,75 parts respectivement.

On a ainsi formé un copolymère statistique de 1,3 butadiène et de styrène ayant un poids moléculaire de 50.500.

On introduit ensuite dans le milieu réactionnel, 45,75 parts de styrène monomère. Le bloc $S_2$ ainsi polymérisé avait un poids moléculaire de 65.200.

Le polymère vivant ainsi formé est désactivé par addition de 0,3 phr de BHT.

Le poids moléculaire du polymère final était de 141.000.

Le polymère est récupéré par élimination du solvant.

Les propriétés obtenues avec ce copolymère pris seul ou en mélange avec du polystyrène cristal sont indiquées au tableau 1.

Exemples comparatifs

On a également repris au tableau 1 les résultats obtenus avec résine commerciale S-B-S et avec une résine commerciale S-B.

7

Tableau 1

| Exemple n° | (1) | | (1 bis) | | (2) | | (3) | | (4) | | (5) | | S-B-S radial commercial | | Résine S-B commerciale | |
|---|---|---|---|---|---|---|---|---|---|---|---|---|---|---|---|---|
| | Pur | Blend 50/50 | Pur | Blend 50/50 | Pur | Blend 50/50 | Pur | Blend 50/50 | Pur | Blend 50/50 | Pur | Blend 50/50 | Pur | Blend 50/50 | Pur | Blend 50/50 |
| S/B (a) | 75/25 | - | 75/25 | - | 75/25 | - | 70/30 | - | 75/25 | - | 75/25 | - | 76/24 | - | 70/30 | - |
| **Traction (DIN 53455)** | | | | | | | | | | | | | | | | |
| Lim. elastique (MPa) | 10.4 | 12 | 11.5 | 12.5 | 14.4 | 10 | 8 | 8.9 | 15.5 | 17.2 | 7.9 | 8.2 | 18.6 | 21.3 | 27.1 | |
| Rupture (MPa) | 23.5 | 9.7 | 22.5 | 10.0 | 26.6 | 10.6 | 17.6 | 10.1 | 19.6 | 22.1 | 16.7 | 11.9 | 28.8 | 17.2 | - | |
| Allongement (%) | 680 | 57 | 3.6 | 1.3 | 416 | 119 | 340 | 115 | 241 | 98 | 112 | 104 | 229 | 25 | 4 | |
| Module (MPa) | 612 | 895 | 608 | 710 | 771 | 613 | 459 | 596 | 780 | 920 | 420 | 453 | | | 1758 | |
| **Flexion (DIN 53452)** | | | | | | | | | | | | | | | | |
| Charge max. (MPa) | 16.7 | 42.5 | 15.0 | 41.1 | 16.8 | 37.5 | 13.6 | 37.7 | 18.5 | 44.5 | 22.3 | 32.6 | 23 | 41.2 | | |
| Module (MPa) | 770 | 1885 | 653 | 1380 | 820 | 1469 | 571 | 1532 | 860 | 1945 | 1023 | 1037 | 1075 | 1170 | 1985 | |
| **Résistance aux chocs** | | | | | | | | | | | | | | | | |
| Charpy (kg.J/m²) (DIN 53453) | | | | | | | | | | | | | | | | |
| Entaillé | 65.3 | 2.42 | 3.9 | 0.8 | 65.0 | 2.38 | 57.4 | 15.0 | N.C. | 5.2 | 61 | 20.9 | 15.6 | 1.9 | | 2.50 |
| **Fluidité à chaud** | | | | | | | | | | | | | | | | |
| MFI (190°C/5kg) (ASTM D 1238) (g/10 min.) | 6.5 | 5.23 | 2.2 | 3.13 | 6.7 | 5.31 | 7.3 | 4.87 | 1.06 | 1.25 | 3.7 | 3.59 | 3.20 | 3.26 | 3.08 | |
| **Propriétés optiques (b) (ASTM D 1003)** | | | | | | | | | | | | | | | | |
| Transmittance (%) | 90 | 69.3 | 78.2 | 57.5 | 89.2 | 70.1 | 87.5 | 65 | 88.3 | 66 | 90 | 68.5 | 90.8 | 66.8 | 52.3 | |
| "HAZE" | 10.2 | 13.5 | 17 | 29 | 6.7 | 14 | 12 | 21 | 11 | 16 | 8.4 | 15 | 6 | 14 | 34.4 | |

(a) Analyse I.R.
(b) Test : sur plaques moulées par compression à 200°C (3,2 mm épaisseur) sous 40 kg/cm²

## Revendications

1.  Procédé pour la production de copolymères blocs linéaires transparents contenant de 60 à 95% en poids de monomère vinylaromatique et de 40 à 5% d'un monomère de diène conjugué, caractérisé en ce qu'il consiste à former par polymérisation anionique séquencée, dans un milieu solvant,

(1) un homopolymère vinylaromatique d'un poids moléculaire compris entre 5.000 et 50.000, désigné par $S_1$, en présence d'une quantité suffisante, liée au poids moléculaire souhaité pour $S_1$, d'un catalyseur organolithium pour amorcer la polymérisation du monomère vinylaromatique,

(2) un homopolymère de diène conjugué de poids moléculaire compris entre 3.000 et 30.000, lié au segment $S_1$ et désigné par $B_1$,

(3) à introduire dans le milieu réactionnel un monomère vinylaromatique et un monomère de diène conjugué, en quantité suffisante pour former un copolymère statistique de poids moléculaire compris entre 10.000 et 100.000, lié au segment $B_1$ et désigné par B/S,

(4) à introduire le monomère vinylaromatique pour former un homopolymère désigné par $S_2$ d'un poids moléculaire compris entre 10.000 et 150.000 et de toute manière d'un poids moléculaire correspondant à au moins le double de celui du segment $S_1$, ce segment $S_2$ étant lié au segment B/S,

(5) à récupérer le copolymère bloc $S_1$-$B_1$-B/S-$S_2$ ainsi formé.

2. Procédé selon la revendication 1 caractérisé en ce que le composé vinylaromatique est choisi dans le groupe comprenant le styrène, l'alphaméthylstyrène, le vinyltoluène et le vinylnaphtalène.

3. Procédé selon la revendication 1, caractérisé en ce que le composé de diène conjugué est choisi dans le groupe comprenant le 1,3-butadiène, l'isoprène, le pyperilène, le 2,3-diméthyl-1,3-butadiène et leurs mélanges.

4. Procédé selon les revendications 1 à 3, en ce que lors des étapes (2) et (3),
   - on introduit d'abord un monomère de diène conjugué pour former un homopolymère bloc, désigné par $B_1$, ayant un poids moléculaire compris entre 3.000 et 30.000,
   - on ajoute ensuite un mélange de monomère vinylaromatique et de diène conjugué pour former un copolymère statistique, désigné par B/S et lié au segment $B_1$, de poids moléculaire compris entre 10.000 et 100.000, cette polymérisation ayant lieu en présence d'un agent de type base de Lewis.

5. Procédé selon les revendications 1 à 3 caractérisé en ce que lors des étapes (2) et (3),
   - on introduit simultanément les monomères de diène conjugué et de vinylaromatique,
   - on forme d'abord essentiellement un homopolymère bloc de diène conjugué, désigné par $B_1$, d'un poids moléculaire compris entre 3.000 et 30.000,
   - on forme ensuite un segment statistique de monomère de diène conjugué et de vinylaromatique, désigné par B/S et lié au segment $B_1$, cette polymérisation ayant lieu en présence d'un solvant du type base de Lewis.

6. Procédé selon l'une quelconque des revendications 1 à 5, caractérisé en ce que l'on assure la distribution statistique des monomères dans le segment B/S en introduisant dans le milieu solvant de 0,01 à 5 phr, par rapport au total des monomères, d'un composé choisi parmi les bases de Lewis.

7. Procédé selon la revendication 6, caractérisé en ce que l'on introduit une base de Lewis choisie parmi les éthers cycliques, les monoéthers et les polyéthers aliphatiques et les amines tertiaires.

8. Procédé selon l'une quelconque des revendications 6 et 7 caractérisé en ce que l'on introduit une base de Lewis choisie parmi le tétrahydrofurane, les dialkyls éthers en $C_2$ et $C_3$, le diéthylèneglycol diméthyléther, le diéthylèneglycol diéthyléther et le tétrahydropyrane, la triéthylamine, la tripropylamine, la tributylamine, la N,N-diméthylaniline, la pyridine, la quinoline et la tétraméthyle éthylène diamine.

9. Procédé selon l'une quelconque des revendications 1 à 8, caractérisé en ce que l'on utilise comme catalyseur organolitique un composé choisi parmi l'éthyllithium, le propyllithium, le butyllithium, l'amyllithium, l'hexyllithium, le cyclohexyllithium, le phényllithium, le tolyllithium, le naphthyllithium et leurs isomères, en particulier le sec-butyllithium et le tert-butyllithium.

10. Procédé selon l'une quelconque des revendications 1 à 9, caractérisé en ce que l'on effectue la polymérisation à une température comprise entre environ - 20°C et 150°C.

**11.** Copolymères blocs transparents produits selon le procédé décrit dans l'une quelconque des revendications 1 à 10.

**12.** Compositions polymères caractérisées en ce qu'elles consistent en un mélange comprenant de 10 à 90% en poids, et de préférence de 30 à 70% du copolymère bloc transparent selon la revendication 11 et de 90 à 10% en poids et de préférence de 70 à 30% d'un polymère choisi parmi le polystyrène crystal, les polyoléfines, les copolymères styrène-méthylméthacrylate, styrène-anhydride maléique et styrène-acrylonitrile.

## Claims

**1.** Process for the production of transparent linear block copolymers containing from 60 to 95% by weight of vinylaromatic monomer and from 40 to 5% of a conjugated diene monomer, characterized in that it consists in forming, by anionic block polymerization, in a solvent medium,

(1) a vinylaromatic homopolymer with a molecular weight between 5,000 and 50,000, referred to as $S_1$, in the presence of an adequate quantity, based on the molecular weight desired for $S_1$ of an organolithium catalyst so as to initiate the polymerization of the vinyl aromatic monomer,

(2) a conjugated diene homopolymer with a molecular weight between 3,000 and 30,000, linked to the segment $S_1$ and referred to as $B_1$,

(3) in introducing into the reaction medium a vinylaromatic monomer and a conjugated diene monomer in a quantity sufficient to form a random copolymer with a molecular weight between 10,000 and 100,000, linked to the segment $B_1$ and referred to as B/S,

(4) in introducing the vinylaromatic monomer so as to form a homopolymer referred to as $S_2$, with a molecular weight between 10,000 and 150,000, and, in any case, with a molecular weight corresponding to at least twice that of the segment $S_1$, this segment $S_2$ being linked to the segment B/S, and

(5) in collecting the block copolymer $S_1$-$B_1$-B/S-$S_2$ thereby formed.

**2.** Process according to Claim 1, characterized in that the vinylaromatic compound is chosen from the group comprising styrene, alpha-methylstyrene, vinyltoluene and vinylnaphthalene.

**3.** Process according to Claim 1, characterized in that the conjugated diene compound is chosen from the group comprising 1,3-butadiene, isoprene, pyperilene (sic), 2,3-dimethyl-1,3-butadiene and mixtures thereof.

**4.** Process according to Claims 1 to 3, ... (sic) in that during stages (2) and (3),
a conjugated diene monomer is first introduced so as to form a block homopolymer, referred to as $B_1$, with a molecular weight between 3,000 and 30,000, and a vinylaromatic and conjugated diene monomer mixture is then added so as to form a random copolymer, referred to as B/S and linked to the segment $B_1$, with a molecular weight between 10,000 and 100,000, this polymerization being carried out in the presence of an agent of the Lewis based type.

**5.** Process according to Claims 1 to 3, characterized in that during stages (2) and (3),
the conjugated diene and the vinylaromatic monomers are introduced simultaneously,
essentially a conjugated diene block homopolymer, referred to as $B_1$, with a molecular weight between 3,000 and 30,000 is first formed, and
a random segment of conjugated diene and vinylaromatic monomer (sic), referred to as B/S and linked to the segment $B_1$, is then formed, this polymerization being carried out in the presence of a solvent of the Lewis based type.

**6.** Process according to any one of Claims 1 to 5, characterized in that the random distribution of the monomers in the segment B/S is ensured by introducing into the solvent medium from 0.01 to 5 phr, relative to the monomers as a whole, of a compound chosen from amongst the Lewis bases.

**7.** Process according to Claim 6, characterized in that a Lewis base chosen from amongst cyclic ethers, aliphatic monoethers and polyethers and tertiary amines is introduced.

EP 0 270 515 B1

8. Process according to either of Claims 6 and 7, characterized in that a Lewis base chosen from amongst tetrahydrofuran, $C_2$ and $C_3$ dialkyls (sic) ethers, diethylene glycol dimethyl ether, diethylene glycol diethyl ether and tetrahydropyran, triethylamine, tripropylamine, tributylamine, N,N-dimethylaniline, pyridine, quinoline and tetramethylethylenediamine is introduced.

9. Process according to any one of Claims 1 to 8, characterized in that a compound chosen from amongst ethyllithium, propyllithium, butyllithium, amyllithium, trimethylenedilithium, tetramethylenedilithium, hexyllithium, cyclohexyllithium, phenyllithium, tolyllithium, naphthyllithium and their isomers, especially sec-butyllithium and tert-butyllithium is employed as the organolithium catalyst.

10. Process according to any one of Claims 1 to 9, characterized in that the polymerization is carried out at a temperature between approximately -20° and 150°C.

11. Transparent block copolymers produced according to the process described in any one of Claims 1 to 10.

12. Polymer compositions characterized in that they consist of a mixture comprising from 10 to 90% by weight, and preferably from 30 to 70%, of the transparent block copolymer according to Claim 11 and from 90 to 10% by weight, and preferably from 70 to 30%, of a polymer chosen from amongst crystal polystyrene, polyolefins, styrenemethylmethacrylate, styrene-maleic anhydride and styreneacrylonitrile copolymers.

**Patentansprüche**

1. Verfahren zum Herstellen von transparenten linearen Blockcopolymeren, die 60 bis 95 Gew.% vinylaromatisches Monomer und 40 bis 5% eines Dien-Monomers mit konjugierten Doppelbindungen enthalten, dadurch gekennzeichnet, daß es beinhaltet, durch anionische Blockpolymerisation in einem Lösungsmittel zu bilden
   (1) ein vinylaromatisches Homopolymer mit einem Molekulargewicht zwischen 5000 und 50000, bzeichnet mit $S_1$, in Gegenwart einer ausreichenden Menge, auf der Basis des für $S_1$ gewünschten Molekulargewichts, eines Organolithiumkatalysators, um die Polymerisation des vinylaromatischen Monomers einzuleiten.
   (2) ein Dien-Homopolymer mit konjugierten Doppelbindungen mit einem Molekulargewicht zwischen 3000 und 30000, verknüpft mit dem Segment $S_1$ und bezeichnet mit $B_1$,
   (3) in das Reaktionsmedium ein vinylaromatisches Monomer und ein Dien-Monomer mit konjugierten Doppelbindungen in einer Menge einzubringen, die ausreicht, um ein statistisches Copolymer zu bilden, mit einem Molekulargewicht, das zwischen 10000 und 100000 liegt, mit dem Segment $B_1$ verbunden ist und mit B/S bezeichnet wird,
   (4) das vinylaromatische Monomer einzubringen, um ein mit $S_2$ bezeichnetes Homopolymer zu bilden, mit einem Molekulargewicht zwischen 10000 und 150000 und in jedem Fall mit einem Molekulargewicht, das wenigstens dem Doppelten desjeniges des Segments $S_1$ entspricht, wobei dieses Segment $S_2$ mit dem Segment B/S verbunden ist, und
   (5) das so gebildete Blockcopolymer $S_1$-$B_1$-B/S-$S_2$ zu sammeln.

2. Verfahren nach Anspruch 1, dadurch gekennzeichnet, daß die vinylaromatische Verbindung aus der Gruppe ausgewählt wird, die aus Styrol, alpha-Methylstyrol, Vinyltoluol und Vinylnaphthalin besteht.

3. Verfahren nach Anspruch 1, dadurch gekennzeichnet, daß die Dien-Verbindung mit konjugierten Doppelbindungen aus der Gruppe ausgewählt wird, die aus 1,3-Butadien, Isopren, Pyperilen, 2,3-Dimethyl-1,3-butadien und Gemischen derselben besteht.

4. Verfahren nach den Ansprüchen 1 bis 3, bei dem während der Schritte (2) und (3)
   - zuerst ein Dien-Monomer mit konjugierten Doppelbindungen eingebracht wird, um ein mit $B_1$ bezeichnetes Blockhomopolymer zu bilden, das ein Molekulargewicht zwischen 3000 und 30000 hat;
   - dann ein Gemisch aus vinylaromatischem und Dien-Monomer mit konjugierten Doppelbindungen zugesetzt wird, um ein statistisches Copolymer zu bilden, das mit B/S bezeichnet wird und mit dem Segment $B_1$ verknüpft ist, mit einem Molekulargewicht zwischen 10000 und 100000, wobei

11

diese Polymerisation in Gegenwart eines Mittels vom Lewis-Basentyp stattfindet.

5. Verfahren nach den Ansprüchen 1 bis 3, dadurch gekennzeichnet, daß während der Schritte (2) und (3)

- das Dien-Monomer mit konjugierten Doppelbindungen und das vinylaromatische Monomer gleichzeitig eingebracht werden,
- zuerst im wesentlichen ein Dien-Blockhomopolymer mit konjugierten Doppelbindungen gebildet wird, das mit $B_1$ bezeichnet wird, mit einem Molekulargewicht zwischen 3000 und 30000,
- dann ein statistisches Segment eines Dien-Monomers mit konjugierten Doppelbindungen und eines vinylaromatischen Monomers, bezeichnet mit B/S und verknüpft mit dem Segment $B_1$, gebildet wird, wobei diese Polymerisation in Gegenwart eines Lösungsmittels vom Lewis-Basentyp stattfindet.

6. Verfahren nach einem der Ansprüche 1 bis 5, dadurch gekennzeichnet, daß die statistische Verteilung der Monomere in dem Segment B/S gewährleistet wird, indem in das Lösungsmittel 0,01 bis 5 phr, relativ zu den gesamten Monomeren, einer Verbindung eingebracht werden, die unter den Lewis-Basen ausgewählt wird.

7. Verfahren nach Anspruch 6, dadurch gekennzeichnet, daß eine Lewis-Base, die unter den cyclischen Ethern, aliphatischen Monoethern und Polyethern sowie tertiären Aminen ausgewählt wird, eingebracht wird.

8. Verfahren nach einem der Ansprüche 6 und 7, dadurch gekennzeichnet, daß eine Lewis-Base, die unter Tetrahydrofuran, $C_2$- und $C_3$-Dialkylethern, Diethylenglycoldimethylether, Diethylenglycoldiethylether und Tetrohydropyran, Triethylamin, Tripropylamin, Tributylamin, N,N-Dimethylanilin, Pyridin, Quinolin und Tetramethylethylendiamin ausgewählt wird, eingebracht wird.

9. Verfahren nach einem der Ansprüche 1 bis 8, dadurch gekennzeichnet, daß als Organolithiumkatalysator eine Verbindung benutzt wird, die unter Ethyllithium, Propyllithium, Butyllithium, Amyllithium, Hexyllithium, Cyclohexyllithium, Phenyllithium, Tolyllithium, Naphthalyllithium und ihren Isomeren, insbesondere Sec-Butyllithium und Tert-Butyllithium, ausgewählt wird.

10. Verfahren nach einem der Ansprüche 1 bis 9, dadurch gekennzeichnet, daß die Polymerisation bei einer Temperatur zwischen etwa -20°C und 150°C ausgeführt wird.

11. Transparente Blockcopolymere, hergestellt nach dem Verfahren, das in einem der Ansprüche 1 bis 10 angegeben ist.

12. Polymere Zusammensetzungen, dadurch gekennzeichnet, daß sie aus einer Mischung bestehen, die 10 bis 90 Gew.% und vorzugsweise 30 bis 70% des transparenten Blockcopolymers nach Anspruch 11 und 90 bis 10 Gew.% und vorzugsweise 70 bis 30 Gew.% eines Polymers enthält, das unter Kristallpolystyrol, Polyolefinen, den Copolymeren Styrolmethylmethacrylat, Styrolmaleinanhydrid und Styrolacrylonitril ausgewählt worden ist.